# EUROPEAN PATENT APPLICATION

(11) **EP 3 974 210 A1**
(43) Date of publication of application: **30.03.2022**
(21) Application number: 21206890.2
(22) Date of filing: 29.01.2018
(51) Int. Cl.: B60C 11/12

(54) **THREE-DIMENSIONAL TIRE SIPE**

(30) Priority: 29.01.2017 US 201762451738 P
(62) Divisional of application: 18745027.5
(71) Applicant: Bridgestone Americas Tire Operations, LLC, Nashville, TN 37201 (US)
(72) Inventor: CLOSE, Reubin R., Rootstown, 44272 (US); MIKLIC, Andrew T., Akron, 44312 (US); BUDD, Andrew C., Clinton, 44216 (US); NELSON, Brandon P., Stow, 44224 (US); FISH, Lee A., Newcomerstown, 43832 (US); BERRY, Charles D., Akron, 44333 (US)
(74) Representative: Banzer, Hans-Jörg

(57) **Abstract**

A tire having a sipe is disclosed, which comprises opposing tread element portions separated by the sipe, each opposing tread element portion including a plurality of positive elements (646) and a plurality of negative elements (648). The plurality of positive elements (646) and the plurality of negative elements (648) include six planar side surfaces (652) having a trapezoidal shape, each planar side surface (652) being oriented relative to an adjacent planar side surface by an angle of 120 degrees. The six planar side surfaces (652) are each connected to a planar terminal surface (650) having a hexagonal shape, wherein the planar terminal surface (650) is parallel to a sipe centerline.

## Description

### BACKGROUND

Tires for use on vehicles may comprise a tread featuring sipes. The presence of sipes in a tire tread may create more surface edges to engage a roadway, which may increase traction in adverse road conditions. For example, a tire tread including sipes may perform better in icy, snowy, or wet road conditions than a tire tread not including sipes. Likewise, the more sipes a tire has, the better traction it may exhibit in adverse road conditions.

However, the addition of sipes to a tire tread block may reduce block stiffness, which may result in undesirable irregular wear patterns in the tire and a decrease in tire performance in dry road conditions (i.e., non-adverse conditions). Increasing the number of sipes in a tire tread block may relate to a decrease in stiffness of that tire tread block.

What is needed is a tire sipe configured to provide adequate traction in adverse road conditions, while maintaining the required stiffness for dry road conditions, and while resisting irregular wear patterns.

### SUMMARY

According to the invention, a tire having a sipe as defined in claim 1 and a sipe blade for forming a sipe in a tire as defined in claim 5 are provided. The dependent claims define preferred and/or advantageous embodiments of the invention.

In one embodiment, a tire having a sipe is provided, the tire comprising: opposing tread element portions separated by the sipe, each opposing tread element portion including a plurality of positive elements and a plurality of negative elements, wherein the plurality of positive elements and the plurality of negative elements include six planar side surfaces having a trapezoidal shape, each planar side surface being oriented relative to an adjacent planar side surface by an angle of 120 degrees, and wherein the six planar side surfaces are each connected to a planar terminal surface having a hexagonal shape, wherein the planar terminal portion is parallel to a sipe centerline.

In one embodiment, a sipe blade for forming a sipe in a tire is provided, the sipe blade comprising: a central plane, and a plurality of positive elements and a plurality of negative elements, wherein the plurality of positive elements and the plurality of negative elements include six planar side surfaces having a trapezoidal shape, each planar side surface being oriented relative to an adjacent planar side surface by an angle of 120 degrees, and wherein the six planar side surfaces are each connected to a planar terminal surface having a hexagonal shape, wherein the planar terminal portion is parallel to the central plane.

In another embodiment, a sipe blade for forming a sipe in a tire is provided, the sipe blade comprising: a central plane, and a plurality of positive elements and a plurality of negative elements, wherein the plurality of positive elements and the plurality of negative elements include three substantially quadrilateral-shaped planar surfaces, each planar surface being oriented relative to another planar surface by an angle of 90 degrees, and wherein the three planar surfaces meet at a rounded terminal portion. In another embodiment, a tire having a sipe is provided, the tire comprising: opposing tread element portions separated by the sipe, each opposing tread element portion including a plurality of positive elements and a plurality of negative elements, wherein the plurality of positive elements and the plurality of negative elements include three substantially quadrilateral-shaped planar surfaces, each planar surface being oriented relative to another planar surface by an angle of 90 degrees, and wherein the three planar surfaces meet at a rounded terminal portion.

### BRIEF DESCRIPTION OF THE DRAWINGS

The accompanying figures, which are incorporated in and constitute a part of the specification, illustrate various example configurations, and are used merely to illustrate various example embodiments. In the figures, like elements bear like reference numerals.
**FIG. 1A** illustrates a perspective view of an example sipe blade **100** for forming a three-dimensional tire sipe.
**FIG. 1B** illustrates an elevation view of an example sipe blade **100** for forming a three-dimensional tire sipe.
**FIG. 1C** illustrates an elevation view of an example sipe blade **100** for forming a three-dimensional tire sipe.
**FIG. 2A** illustrates a sectional view of an example sipe blade **200** for forming a three-dimensional tire sipe.
**FIG. 2B** illustrates a sectional view of an example sipe blade **200** for forming a three-dimensional tire sipe.
**FIG. 3** illustrates a perspective view of an example sipe blade **300** for forming a three-dimensional tire sipe.
**FIG. 4** illustrates a perspective view of a tire section **430** illustrating molding using a sipe blade **400** for forming a three-dimensional tire sipe.
**FIG. 5** illustrates a plan view of a tire tread element **534** illustrating engagement between a first and second element of a three-dimensional tire sipe.
**FIG. 6** illustrates a perspective view of an example sipe blade **600** for forming a three-dimensional tire sipe.
**FIG. 7** illustrates a sectional view of an example sipe blade **740** for forming a three-dimensional tire sipe.
**FIG. 8A** illustrates an elevation view of a three-dimensional element for forming a three-dimensional tire sipe.
**FIG. 8B** illustrates a plan view of a three-dimensional element for forming a three-dimensional tire sipe.
**FIG. 9** illustrates an elevation view of an example sipe blade **900** for forming a three-dimensional tire sipe.
**FIG. 10** illustrates a plan view of a tire tread element **1060** illustrating engagement between a first and second element of a three-dimensional tire sipe.
**FIG. 11** illustrates a perspective view of an example sipe blade **1100** for forming a three-dimensional tire sipe.
**FIG. 12** illustrates a sectional view of an example sipe blade **1200** for forming a three-dimensional tire sipe.
**FIG. 13A** illustrates a perspective view of an example sipe blade **1300** arranged in a mold **1390** for forming a three-dimensional tire sipe.
**FIG. 13B** illustrates a detail view of example sipe blade **1300** arranged in a mold **1390** for forming a three-dimensional tire sipe.

### DETAILED DESCRIPTION

Tires not intended for operation on smooth, dry surfaces typically comprise a tread pattern, including a least one groove, at least one rib, and/or a plurality of tread blocks. Tires intended for operation in inclement conditions, including for example icy or snowy conditions, may additionally comprise a plurality of sipes in the tire tread. The addition of sipes in the tire tread may result in more surface edges in the tire tread for engagement with the icy or snowy roadway.

Increasing the length of a sipe, such as providing the sipe with a three-dimensional pattern, may increase the amount of cutting edges available to engage snowy, icy, and/or wet road surfaces.

Providing the sipe with a three-dimensional pattern in at least one of the lateral direction of the tire and the radial direction of the tire, may allow opposing walls of the sipe to at least partially engage one another in a high friction, or locking, manner to maintain a desired stiffness of the tire tread block or tire tread rib. Maintaining a specified level of stiffness in the tire tread may mitigate or eliminate irregular wear patterns. Maintaining a specified level of stiffness in the tire tread may improve stopping distance of the tire. Maintaining a specified level of stiffness in the tire tread may improve traction of the tire.

Traditional sipes comprise substantially radially-oriented, narrow slits extending from a tread surface into the tread. These traditional sipes typically include straight, parallel walls.

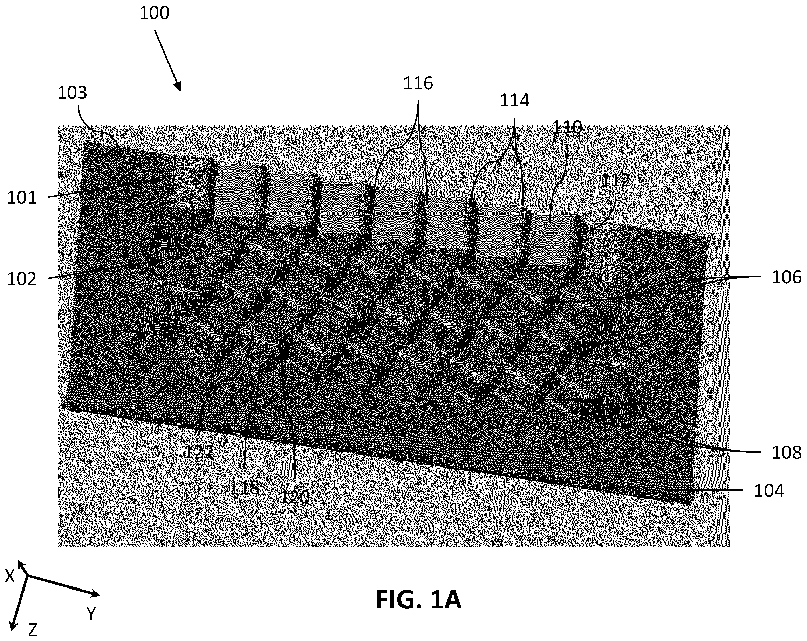

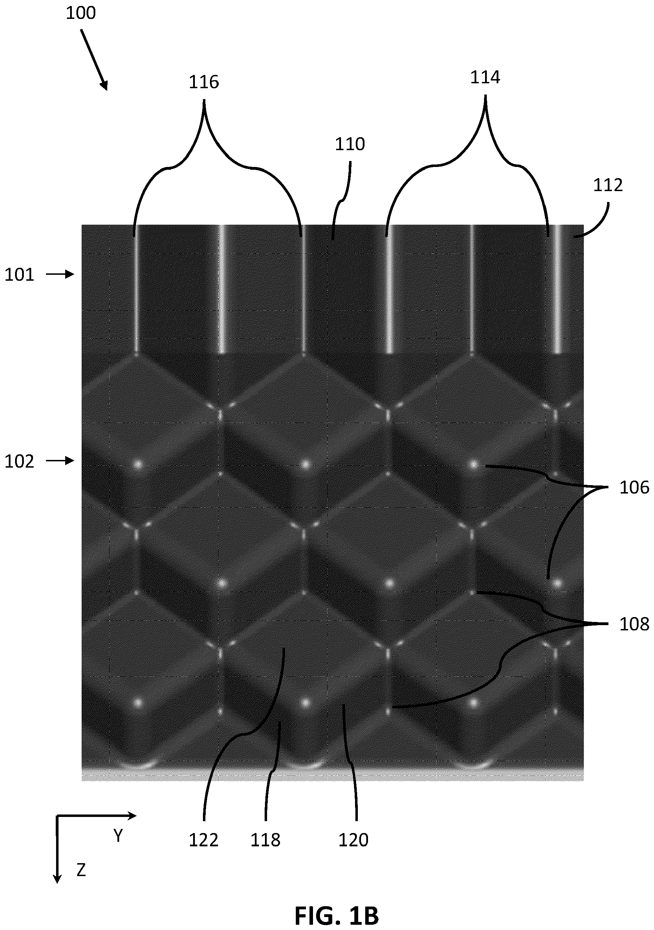

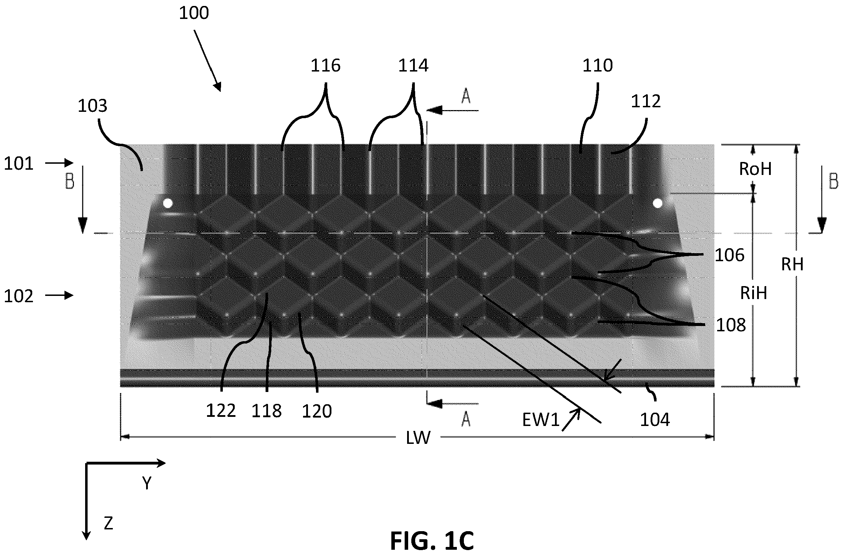

**FIGS. 1A****,** **1B****,** and **1C** illustrate an example sipe blade **100** for forming a three-dimensional tire sipe. Blade **100** may include a radially outer zig-zag portion **101,** and a radially inner three-dimensional portion **102.** Blade **100** may include a central plane **103,** and a base **104.**

Blade **100** may be used in conjunction with a mold to mold a three-dimensional sipe into a tire. The use of blade **100** results in the creation of a negative of blade **100** being formed in a sipe of a tire, creating the three-dimensional sipe.

Blade **100** may be formed using a thin sheet of material pressed into a desired shape, and generally having a material thickness that is consistent at least through radially outer zig-zag portion **101** and radially inner three-dimensional portion **102.** Blade **100** may be formed using a thin sheet of material pressed into a desired shape, and generally having a material thickness that is not constant in radially inner three-dimensional portion **102.** Base **104** may have a material thickness that is different when compared to that of radially outer zig-zag portion **101** and radially inner three-dimensional portion **102.** In this manner, it is understood that a feature that is positive (i.e., extending out of blade **100** on a first side of blade **100)** is negative (i.e., extending into blade **100** on a second side of blade **100).** Blade **100** may be formed using any of a variety of manufacturing methods, including for example, machining, three-dimensional printing, casting, stamping, and the like, so as to produce the relationship described herein between positive elements and negative elements on exact opposite sides of blade **100.** This arrangement is shared by each blade described herein.

Blade **100** may be formed from any of a variety of materials, including for example a metal (e.g., a steel or an alloy), a polymer, a ceramic, a composite, and the like. Blade **100** may be formed from a material capable of withstanding the heat and pressure associated with molding a tire.

It is understood that when molding a tire using a sipe blade, such as blade **100** (and all other blades described below), base **104** forms the base of a sipe in a tire, while radially outer zig-zag portion would form the ground-contacting radially outer portion of the sipe. Blade **100** may be affixed into a tire mold in such a manner to effect this molding orientation. As such, the term "radially outer zig-zag portion" reflects the fact that a three-dimensional sipe molded into a tire using blade **100** (and all other blades described below) would include the zig-zag feature molded by radially outer zig-zag portion **101** in a portion of the three-dimensional sipe that is oriented radially outward relative to the remainder of the three-dimensional sipe. Similarly, the term "radially inner three-dimensional portion" reflects the fact that a three-dimensional sipe molded into a tire using blade **100** (and all other blades described below) would include the three-dimensional feature molded by radially inner three-dimensional portion **102** in a portion of the three-dimensional sipe that is oriented radially inward relative to radially outer zig-zag portion **101.**

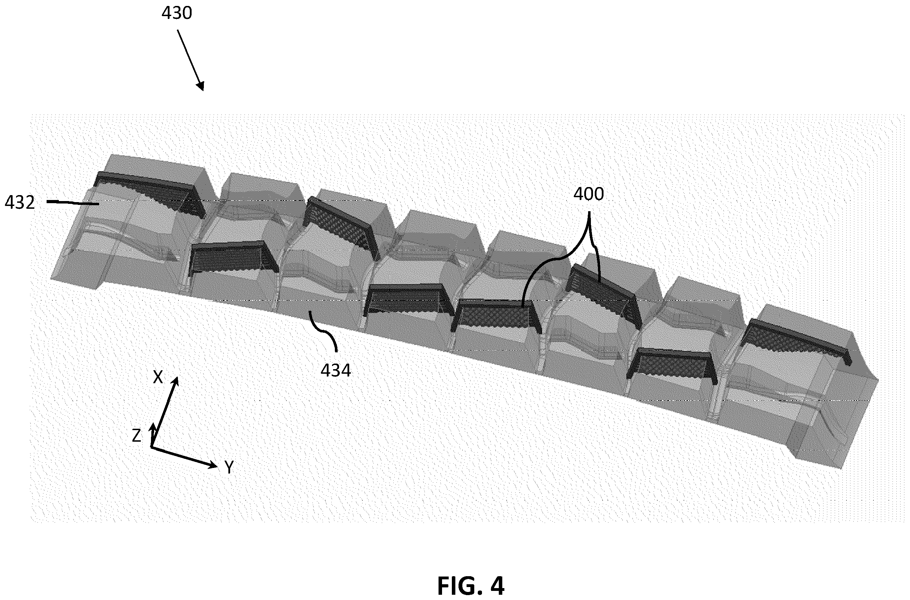

The X, Y, and Z axes illustrated in the figures are utilized for ease of description of the invention, and are not intended as limiting. In some instances, the X-axis may be generally tangential to the circumferential direction of a tire, the Y-axis may be generally parallel to the axial direction of a tire, and the Z-axis may be generally parallel to the radial direction of a tire. In some instances, the X-axis may be exactly tangential to the circumferential direction of a tire, the Y-axis may be exactly parallel to the axial direction of a tire, and the Z-axis may be exactly parallel to the radial direction of a tire. However, as illustrated in **FIG. 4****,** sipes formed using blade **100** (and all blades described herein) are not necessarily aligned as described above, but rather, may be inclined relative to the axial, circumferential, and/or radial directions of the tire. In this sense, the X, Y, and Z axes are not limiting, but are utilized for convenience.

Blade **100** may include a plurality of positive elements **106** and a plurality of negative elements **108.** Collectively, these features may form the three-dimensional feature described herein. That is, a pattern of alternating positive elements **106** and negative elements **108** may form the three-dimensional feature described as radially inner three-dimensional portion **102.**

Radially inner three-dimensional portion **102** may have a height **RiH.** Blade **100** may have a height **RH.** Height **RiH** may be about 62% of blade radial height **RH.** Height **RiH** may be 62% of blade radial height **RH.** Height **RiH** may be about 77% of blade radial height **RH** Height **RiH** may be 77% of blade radial height **RH.** Height **RiH** may be about 80% of blade radial height **RH.** Height **RoH** may be 80% of blade radial height **RH.** Height **RiH** may be between about 60% and about 80% of blade radial height **RH.** Height **RiH** may be between 60% and 80% of blade radial height **RH.** Height **RiH** may be between about 55% and about 85% of blade radial height **RH.** Height **RiH** may be between 55% and 85% of blade radial height **RH.** A sipe molded into a tire using blade **100** will have the same relationship in heights **of RH** and **RiH.**

As illustrated further below, positive elements **106** and negative elements **108** may result in corresponding positive elements and negative elements in a three-dimensional tire sipe molded using blade **100.** These corresponding positive elements and negative elements may interlock with one another so as to create stiffness in a tire tread element having the three-dimensional sipe. The corresponding features may come together along the X-axis, to provide greater shear strength in the Y-Z plane between opposing faces of a sipe, as compared to a traditional, straight wall sipe.

Radially outer zig-zag portion **101** may be formed by a series of alternating angled surfaces **110** and **112,** which form radially-extending peaks **114** and valleys **116.** These peaks and valleys may form corresponding peaks and valleys in a tire sipe molded using blade **100.** These corresponding peaks and valleys may interlock with one another so as to create stiffness in a tire tread element having the three-dimensional sipe.

Radially outer zig-zag portion **101** may have a height **RoH.** Height **RoH** may be about 20% of blade radial height **RH.** Height **RoH** may be 20% of blade radial height **RH.** Height **RoH** may be about 23% of blade radial height **RH.** Height **RoH** may be 23% of blade radial height **RH.** Height **RoH** may be about 37% of blade radial height **RH.** Height **RoH** may be 37% of blade radial height **RH.** Height **RoH** may be between about 20% and about 40% of blade radial height **RH.** Height **RoH** may be between 20% and 40% of blade radial height **RH.** Height **RoH** may be between about 15% and about 45% of blade radial height **RH** Height **RoH** may be between 15% and 45% of blade radial height **RH.** A sipe molded into a tire using blade **100** will have the same relationship in heights **of RH** and **RoH.**

The interlocking aspect of the features described herein (in reference to each of the three-dimensional sipes herein) may result in a tire tread sipe that has the increased surface area desired when the sipe is "open" (e.g., while running down a roadway), but may result in increased stiffness when the sipe is "closed" (e.g., under breaking or when heavy tractive forces are applied, which may result in the tread element containing the sipe to be deformed).

Each of the three-dimensional features forming the plurality of positive elements **106** and a plurality of negative elements **108** may be made up of three planar surfaces **118, 120,** and **122.** For the ease of description, planar surfaces **118** and **120** may be referred to as side surface **118** and side surface **120,** while planar surface **122** may be referred to as top surface **122.** It is understood that these terms are not intended to be limiting, but rather, are used to simply clarify the relationship between these surfaces.

Each of planar surfaces **118, 120,** and **122** may be angled relative to one another by about 90 degrees. Each of planar surfaces **118, 120,** and **122** may be angled relative to one another by 90 degrees. Each of planar surfaces **118, 120,** and **122** may be angled relative to one another by between about 85 degrees and about 95 degrees. Each of planar surfaces **118, 120,** and **122** may be angled relative to one another by between 85 degrees and 95 degrees. Each of planar surfaces **118, 120,** and **122** may be angled relative to one another by between about 80 degrees and about 100 degrees. Each of planar surfaces **118, 120,** and **122** may be angled relative to one another by between 80 degrees and 100 degrees. Each of planar surfaces **118, 120,** and **122** may be angled relative to one another by between about 75 degrees and about 105 degrees. Each of planar surfaces **118, 120,** and **122** may be angled relative to one another by between 75 degrees and 105 degrees.

In one embodiment, the point at which each of planar surfaces **118, 120,** and **122** meet may be a rounded, terminal portion. The terminal portion may have a radius.

Each of planar surfaces **118, 120,** and **122** may have a quadrilateral shape. One or more of planar surfaces **118, 120,** and **122** may be at least one of a square, a rectangle, a rhombus, and a parallelogram. In one embodiment, each of planar surfaces **118, 120,** and **122** is a square. In another embodiment, top surface **122** may be square, while side surfaces **118, 120** are rectangular.

In one embodiment, top surface **122** may have a width **EW1.** Top surface **122** may be square, and thus may have a width **EW1** about each of its four sides. Where side surfaces **118, 120** are rectangular, side surfaces **118, 120** may also have a width **EW1** about two sides, with a height being greater than or less than **EW1,** which will be further described below.

Blade **100** may have a longitudinal width **LW.**

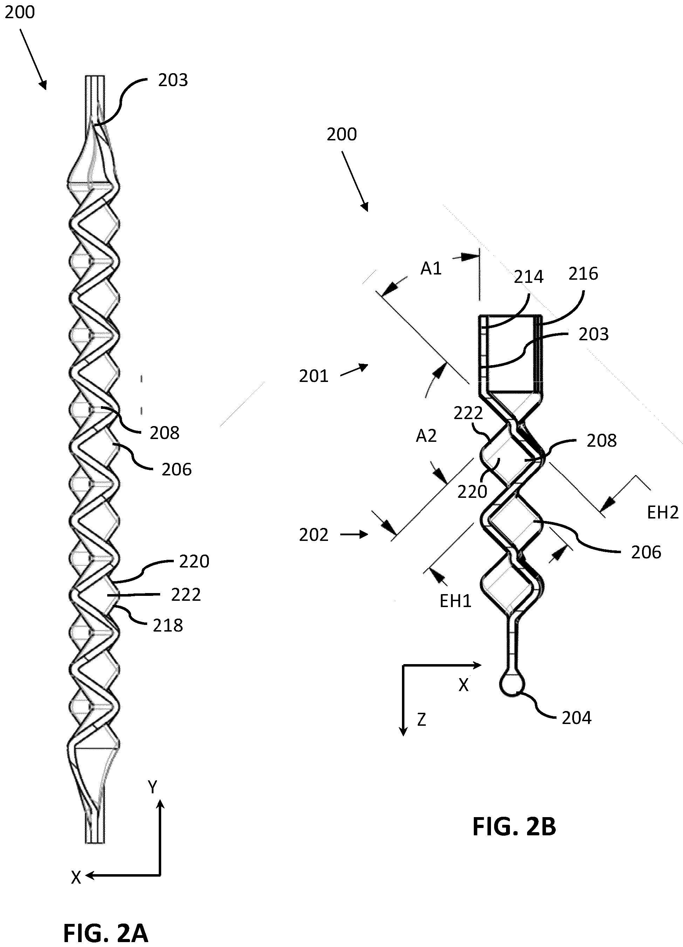

**FIGS. 2A** and **2B** illustrate sectional views of an example sipe blade **200** for forming a three-dimensional tire sipe. **FIG. 2A** represents a sectional view taken about line **B-B** in **FIG. 1C****.** **FIG. 2B** represents a sectional view taken about line **A-A** in **FIG. 1C****.**

Sipe blade **200** may include a radially outer zig-zag portion **201,** and a radially inner three-dimensional portion **202.** Blade **200** may include a central plane **203,** and a base **204.**

Blade **200** may include a plurality of positive elements **206** and negative elements **208.** The plurality of positive elements **206** and negative elements **208** may be made up planar surfaces **218, 220,** and **222.** Blade **200** may include a plurality of valleys **216** and peaks **214** oriented in the radially outer zig-zag portion **201.**

In one embodiment, central plane **203** bisects the plurality of positive elements **206** and negative elements **208.**

Each of the plurality of positive elements **206** and negative elements **208** may have a height **EH1, EH2.** Height **EH1, EH2** may be equal to width **EW1** described above with respect to **FIG. 1C****.** Height **EH1, EH2** may be less than width **EW1** described above with respect to **FIG. 1C****.** Height **EH1, EH2** may be greater than width **EW1** described above with respect to **FIG. 1C****.** Height **EH1, EH2** may about 71.5% of width **EW1.** Height **EH1, EH2** may 71.5% of width **EW1.** Height **EH1, EH2** may between about 70% and about 75% of width **EW1.** Height **EH1, EH2** may between 70% and 75% of width **EW1.** Height **EH1, EH2** may between about 65% and about 80% of width **EW1.** Height **EH1, EH2** may between 65% and 80% of width **EW1.** Height **EH1, EH2** may between about 60% and about 85% of width **EW1.** Height **EH1, EH2** may between 60% and 85% of width **EW1.** A sipe molded into a tire using blade **200** will have the same relationship in heights **EH1, EH2,** and width **EW1.**

The line formed by the intersection of planar surfaces **218** and **220** may be oriented at an angle **A1** relative to peak **214** (and central plane **203).** Angle **A1** may be about 45 degrees. Angle **A1** may be 45 degrees.

The line formed by the intersection of planar surfaces **218** and **220** may be oriented at an angle **A2** relative to planar surface **222** (forming the top surface). Angle **A2** may be about 90 degrees. Angle **A2** may be 90 degrees.

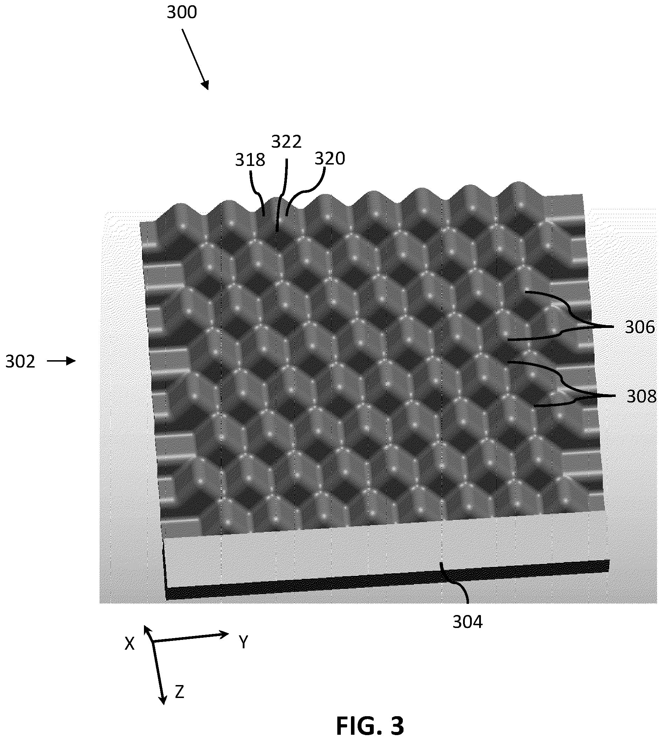

**FIG. 3** illustrates a perspective view of an example sipe blade **300** for forming a three-dimensional tire sipe. Blade **300** may include a three-dimensional portion **302.** Blade **300** may include a central plane (not shown), and a base **304.**

Blade **300** may include a plurality of positive elements **306** and a plurality of negative elements **308.** Collectively, these features may form the three-dimensional feature described herein. That is, a pattern of alternating positive elements **306** and negative elements **308** may form the three-dimensional feature described as radially inner three-dimensional portion **302.**

Each of the three-dimensional features forming the plurality of positive elements **306** and a plurality of negative elements **308** may be made up of three planar surfaces **318, 320,** and 322. For the ease of description, planar surfaces **318** and **320** may be referred to as side surface **318** and side surface **320,** while planar surface **322** may be referred to as top surface **322.** It is understood that these terms are not intended to be limiting, but rather, are used to simply clarify the relationship between these surfaces.

Each of planar surfaces **318, 320,** and **322** may be angled relative to one another by about 90 degrees. Each of planar surfaces **318, 320,** and **322** may be angled relative to one another by 90 degrees.

Each of planar surfaces **318, 320,** and **322** may be square in shape, with all four sides being equal in length.

**FIG. 4** illustrates a perspective view of a tire section **430** illustrating molding using a sipe blade **400** for forming a three-dimensional tire sipe.

Tire section **430** may include a tread portion **432.** Tread portion **432** may include at least one tread element **434.** Tread element **434** may be a block or a rib. Tread element **434** may include at least one sipe formed by blade **400.** Blade **400** is structurally similar to blades **100, 200,** and **300** discussed above. As illustrated, some sipes may be oriented substantially parallel to the axial direction of the tire, while others may be inclined relative to at least one of the axial, circumferential, and radial directions of the tire. As illustrated, the axial direction is parallel to the Y-axis, the circumferential direction is parallel to the X-axis, and the radial direction is parallel to the Z-axis.

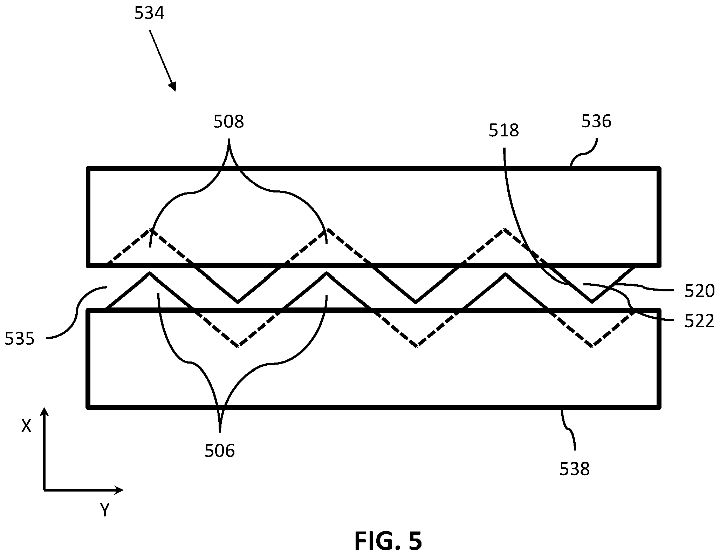

**FIG. 5** illustrates a plan view of a tire tread element **534** illustrating engagement between a first and second element of a three-dimensional tire sipe. Tread element **534** may be at least partially bisected by a three-dimensional sipe **535,** forming a first tread element portion **536** and a second tread element portion **538.** Tread element portions **536, 538** may include a plurality of positive elements **506** and a plurality of negative elements **508.**

Each of the three-dimensional features forming the plurality of positive elements **506** and a plurality of negative elements **508** may be made up of three planar surfaces **518, 520,** and **522.** For the ease of description, planar surfaces **518** and **520** may be referred to as side surface **518** and side surface **520,** while planar surface **522** may be referred to as top surface **522.** It is understood that these terms are not intended to be limiting, but rather, are used to simply clarify the relationship between these surfaces.

Each of planar surfaces **518, 520,** and **522** may be angled relative to one another by about 90 degrees. Each of planar surfaces **518, 520,** and **522** may be angled relative to one another by 90 degrees.

In practice, three-dimensional sipe **535** may be in contact with a running surface of a tire. When the tire is subjected to forces, tread element portions **536, 538** may extend toward one another, for example, along the X-axis, such that positive elements **506** may at least partially engage and interlock with negative elements **508,** and vice versa. In this manner, three-dimensional sipe **535** may perform its function as a sipe (increasing surface area of tractive elements in a tire), while maintaining the rigidity of tread element **534.** That is, the engagement of positive elements **506** with negative elements **508** may greater provide shear strength in tread element **534** in at least one of a radial direction, axial direction, and circumferential direction of the tire, as compared to a traditional, straight wall sipe.

The forces subjected to tread element portions **536, 538** that may cause interlocking thereof include forces applied to a tire when a vehicle using that tire at least one of: brakes, accelerates, and corners.

It is understood that a tire made using blades **100, 200, 300,** and **400** would have sipes including the characteristics and features of the three-dimensional and two-dimensional elements of blades **100, 200, 300,** and **400,** but in a negative.

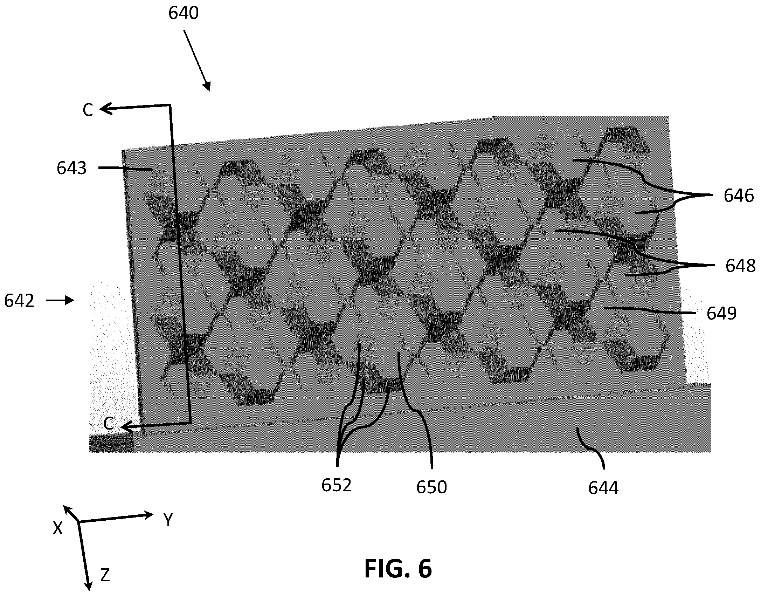

**FIG. 6** illustrates a perspective view of an example sipe blade **600** for forming a three-dimensional tire sipe. Blade **640** may include a three-dimensional portion **642.** Blade **640** may include a central plane **643,** and a base **644.**

Blade **640** may include a plurality of positive elements **646** and a plurality of negative elements **648.** Collectively, these features may form the three-dimensional feature described herein. That is, a pattern of alternating positive elements **646** and negative elements **648** may form the three-dimensional feature described as radially inner three-dimensional portion **642.** Each positive feature **646** and negative feature **648** may be separated by diagonally-adjacent positive feature **646** and negative elements **648** by a planar, diamond-shaped intermediate portion **649,** which may be coplanar with central plane **643,** and coplanar with the centerline of a sipe formed by blade **640.** As described above, what appear as positive elements **646** at a specific point on one side of blade **640** appear as negative elements **648** on the exact opposite side of blade **640.**

Each of the three-dimensional features forming the plurality of positive elements **646** and a plurality of negative elements **648** may be made up of seven planar surfaces **650** and **652.** For the ease of description, planar surfaces **650** and **652** may be referred to as side surfaces **652** and terminal surface **650.** It is understood that these terms are not intended to be limiting, but rather, are used to simply clarify the relationship between these surfaces.

Each of the three-dimensional features forming the plurality of positive elements **646** and a plurality of negative elements **648** may be made up of six side surfaces **652** capped by a terminal surface **650.** Each side surface **652** may be oriented in the shape of a trapezoid, and may be oriented at an angle of about 120 degrees relative to adjacent side surfaces **652.** Each side surface **652** may be oriented at an angle of 120 degrees relative to adjacent side surfaces **652.** Terminal surface **650** may be hexagonal in shape.

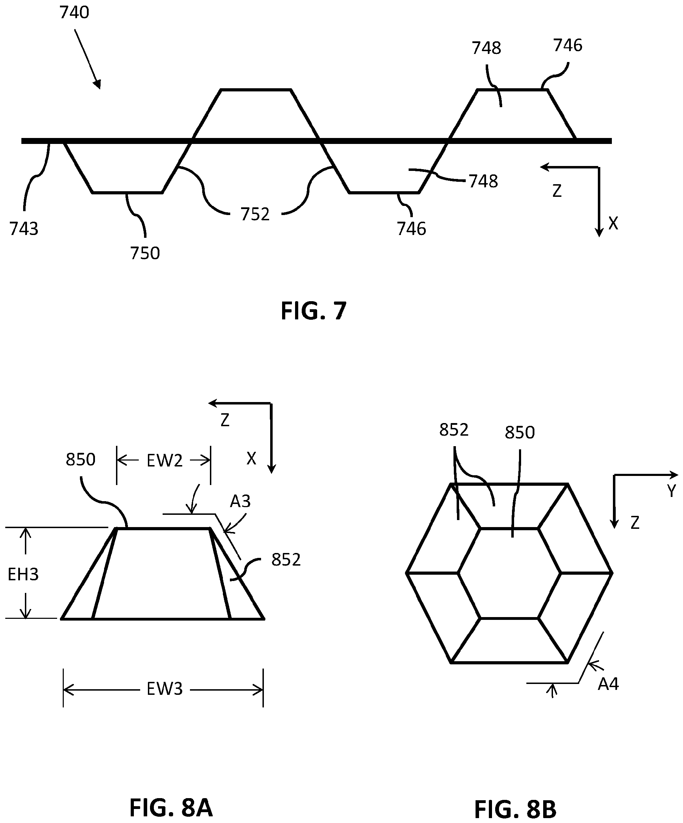

**FIG. 7** illustrates a sectional view of an example sipe blade **740** for forming a three-dimensional tire sipe. **FIG. 7** represents a sectional view taken about line **C-C** in **FIG. 6****.** Blade **740** may include a central plane **743.** Blade **740** may include a plurality of positive elements **746** and a plurality of negative elements **748.** Collectively, these features may form the three-dimensional feature described herein. Each element forming positive elements **746** and negative elements **748** may include a plurality of planar, side surfaces **752,** capped by a planar, terminal surface **750.** Terminal surface **750** may be parallel to central plane **743,** and likewise parallel to a centerline of a sipe formed using blade **740.**

As illustrated, the same element forming positive feature **746** on one side of blade **740** forms negative feature **748** when viewed from the opposite side of blade **740.**

**FIGS. 8A** and **8B** illustrate elevation and plan views, respectively, of a three-dimensional element for forming a three-dimensional tire sipe. The element may include a planar, terminal surface **850,** and a plurality of planar, side surfaces **852.** Each element may have an element width **EW2** that is the width of terminal surface **850,** and an element width **EW3** that is the width of the base of the element. **EW2** may be about 50% of **EW3. EW2** may be 50% of **EW3. EW2** may be between about 40% and about 60% of **EW3. EW2** may be between 40% and 60% of **EW3. EW2** may be between about 30% and about 70% **of EW3. EW2** may be between 30% and 70% of **EW3.** A sipe molded into a tire using a sipe blade having these elements will have the same relationship in element widths **EW2** and **EW3.**

The element may include an element height **EH3,** which is about equal to **EW2. EH3** may be equal to **EW2. EH3** may be less than **EW2. EH3** may be greater than **EW2.**

Each side surface **852** may be oriented at an angle **A3** relative to terminal surface **850.** Angle **A3** may be about 38 degrees. Angle **A3** may be 38 degrees. Angle **A3** may be between about 35 degrees and 45 degrees. Angle **A3** may be between 35 degrees and 45 degrees. Angle **A3** may be between about 30 degrees and about 50 degrees. Angle **A3** may be between 30 degrees and 50 degrees. Angle **A3** may be greater than 38 degrees. Angle **A3** may be less than 38 degrees.

Each side surface **852** may be oriented at an angle **A4** relative to adjacent side surfaces. Angle **A4** may be about 120 degrees. Angle **A4** may be 120 degrees. Angle **A4** may be greater than 120 degrees. Angle **A4** may be less than 120 degrees.

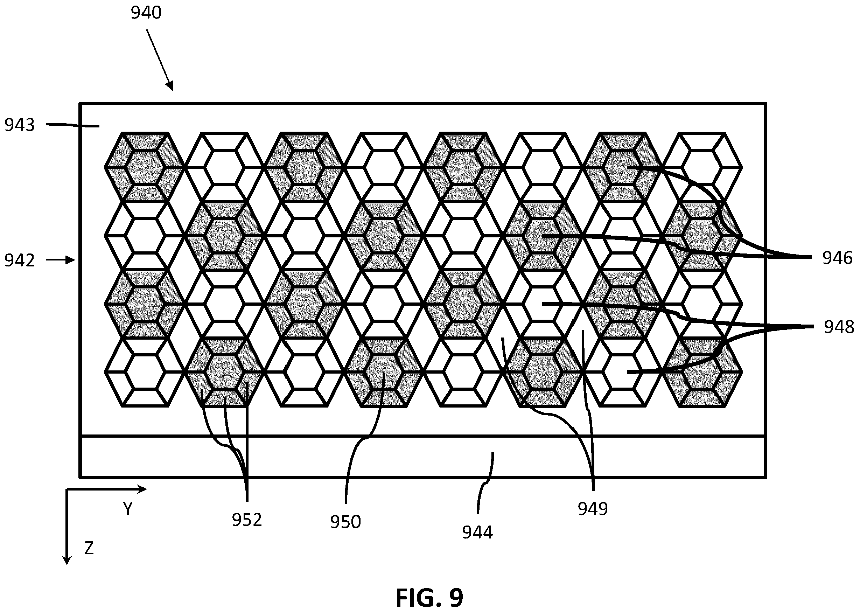

**FIG. 9** illustrates an elevation view of an example sipe blade **900** for forming a three-dimensional tire sipe. Blade **940** may include a three-dimensional portion **942.** Blade **940** may include a central plane **943,** and a base **944.**

Blade **940** may include a plurality of positive elements **946** and a plurality of negative elements **948.** Collectively, these features may form the three-dimensional feature described herein. That is, a pattern of alternating positive elements **946** and negative elements **948** may form the three-dimensional feature described as radially inner three-dimensional portion **942.** Each positive feature **946** and negative feature **948** may be separated by diagonally-adjacent positive feature **946** and negative elements **948** by a planar, diamond-shaped intermediate portion **949,** which may be coplanar with central plane **943,** and coplanar with the centerline of a sipe formed by blade **940.** As described above, what appear as positive elements **946** at a specific point on one side of blade **940** appear as negative elements **948** on the exact opposite side of blade **940.**

Each of the three-dimensional features forming the plurality of positive elements **946** and a plurality of negative elements **948** may be made up of seven planar surfaces **950** and **952.** For the ease of description, planar surfaces **950** and **952** may be referred to as side surfaces **952** and terminal surface **950.** It is understood that these terms are not intended to be limiting, but rather, are used to simply clarify the relationship between these surfaces.

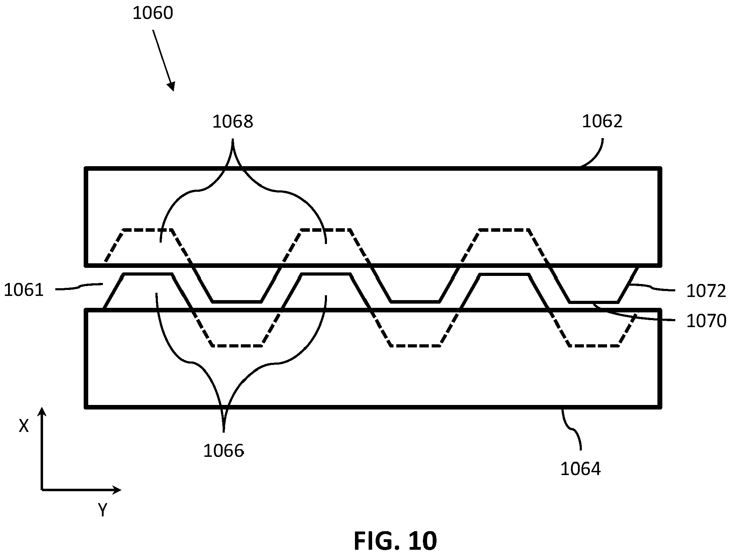

**FIG. 10** illustrates a plan view of a tire tread element **1060** illustrating engagement between a first and second element of a three-dimensional tire sipe. Tread element **1060** may be at least partially bisected by a three-dimensional sipe **1061,** forming a first tread element portion **1062** and a second tread element portion **1064.** Tread element portions **1062, 1064** may include a plurality of positive elements **1066** and a plurality of negative elements **1068.**

Each of the three-dimensional features forming the plurality of positive elements **1066** and a plurality of negative elements **1068** may be made up of seven planar surfaces, six being side surfaces **1072,** and one being terminal surface **1070.** It is understood that these terms are not intended to be limiting, but rather, are used to simply clarify the relationship between these surfaces.

In practice, three-dimensional sipe **1061** may be in contact with a running surface of a tire. When the tire is subjected to forces, tread element portions **1062, 1064** may extend toward one another, for example, along the X-axis, such that positive elements **1066** may at least partially engage and interlock with negative elements **1068,** and vice versa. In this manner, three-dimensional sipe **1061** may perform its function as a sipe (increasing surface area of tractive elements in a tire), while maintaining the rigidity of tread element **1060.** That is, the engagement of positive elements **1066** with negative elements **1068** may provide greater shear strength in tread element **1060** in at least one of a radial direction, axial direction, and circumferential direction of the tire, as compared to a traditional, straight wall sipe.

The forces subjected to tread element portions **1062, 1064** that may cause interlocking thereof include forces applied to a tire when a vehicle using that tire at least one of: brakes, accelerates, and corners.

It is understood that a tire made using blades **640, 740,** and **940** would have sipes including the characteristics and features of the three-dimensional and two-dimensional elements of blades **640, 740,** and **940,** but in a negative.

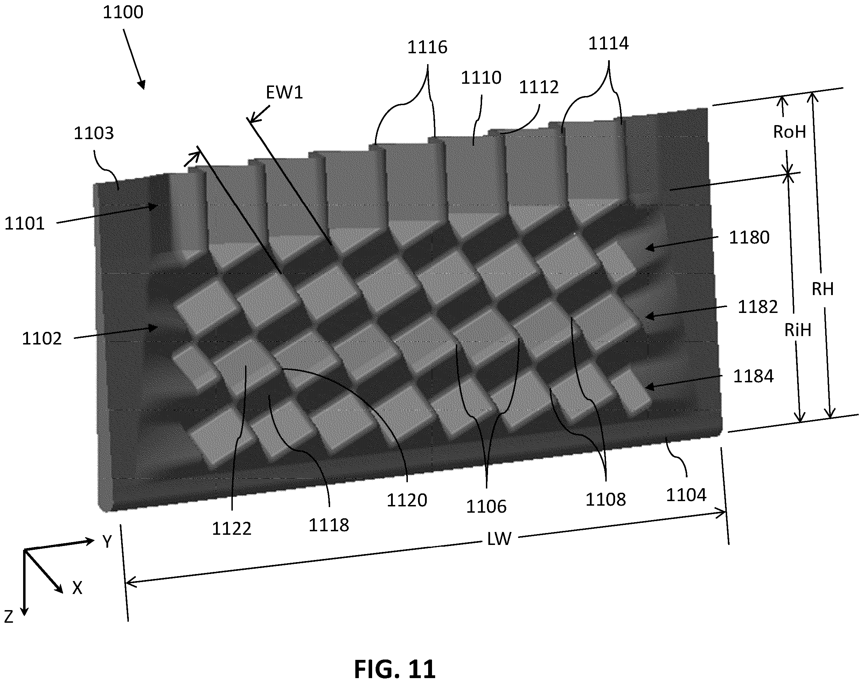

**FIG. 11** illustrates a perspective view of an example sipe blade **1100** for forming a three-dimensional tire sipe. Blade **1100** may include a radially outer zig-zag portion **1101,** and a radially inner three-dimensional portion **1102.** Blade **1100** may include a central plane **1103,** and a base **1104.**

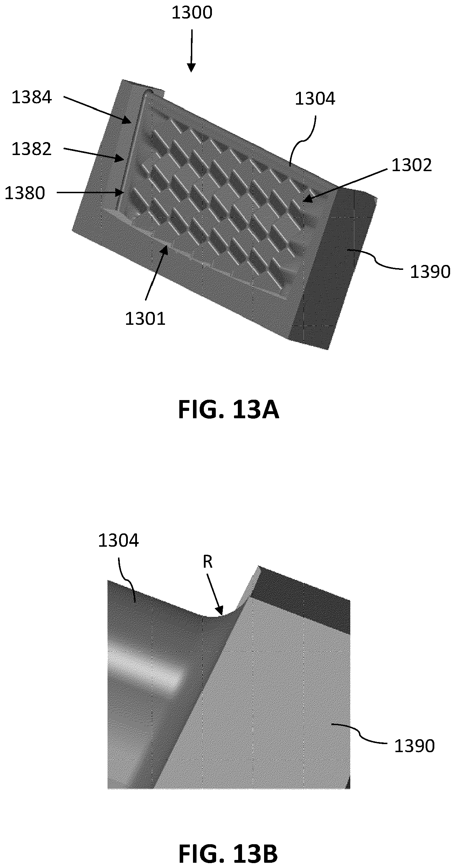

Blade **1100** may be used in conjunction with a mold **(1390** in **FIGS. 13A** and **13B****)** to mold a three-dimensional sipe into a tire. The use of blade **1100** results in the creation of a negative of blade **1100** being formed in a sipe of a tire, creating the three-dimensional sipe.

Blade **1100** may be formed using a thin sheet of material pressed into a desired shape, and having a material thickness that is not constant at least through radially outer zig-zag portion **1101.** Base **1104** may have a material thickness that is different when compared to that of radially outer zig-zag portion **1101** and radially inner three-dimensional portion **1102.** In this manner, it is understood that a feature that is positive (i.e., extending out of blade **1100** on a first side of blade **1100)** is negative (i.e., extending into blade **1100** on a second side of blade **1100).** Blade **1100** may be formed using any of a variety of manufacturing methods, including for example, machining, three-dimensional printing, casting, stamping, and the like, so as to produce the relationship described herein between positive elements and negative elements on exact opposite sides of blade **1100.** This arrangement is shared by each blade described herein.

Blade **1100** may be formed from any of a variety of materials, including for example a metal (e.g., a steel or an alloy), a polymer, a ceramic, a composite, and the like. Blade **1100** may be formed from a material capable of withstanding the heat and pressure associated with molding a tire.

It is understood that when molding a tire using a sipe blade, such as blade **1100** (and all other blades described below), base **1104** would form the base of a sipe, whereas radially outer zig-zag portion **1101** would form the ground-contacting radially outer portion of the sipe. Blade **1100** may be affixed into a tire mold in such a manner to effect this molding orientation. As such, the term "radially outer zig-zag portion" reflects the fact that a three-dimensional sipe molded into a tire using blade **1100** (and all other blades described below) would include the zig-zag feature molded by radially outer zig-zag portion **1101** in a portion of the three-dimensional sipe that is oriented radially outward relative to the remainder of the three-dimensional sipe. Similarly, the term "radially inner three-dimensional portion" reflects the fact that a three-dimensional sipe molded into a tire using blade **1100** (and all other blades described below) would include the three-dimensional feature molded by radially inner three-dimensional portion **1102** in a portion of the three-dimensional sipe that is oriented radially inward relative to radially outer zig-zag portion **1101.**

The X, Y, and Z axes illustrated in the figures are utilized for ease of description of the invention, and are not intended as limiting. In some instances, the X-axis may be generally tangential to the circumferential direction of a tire, the Y-axis may be generally parallel to the axial direction of a tire, and the Z-axis may be generally parallel to the radial direction of a tire. In some instances, the X-axis may be exactly tangential to the circumferential direction of a tire, the Y-axis may be exactly parallel to the axial direction of a tire, and the Z-axis may be exactly parallel to the radial direction of a tire. However, as illustrated in **FIG. 4****,** sipes formed using blade **1100** (and all blades described herein) are not necessarily aligned as described above, but rather, may be inclined relative to the axial, circumferential, and/or radial directions of the tire. In this sense, the X, Y, and Z axes are not limiting, but are utilized for convenience.

Blade **1100** may include a plurality of positive elements **1106** and a plurality of negative elements **1108.** Collectively, these features may form the three-dimensional feature **1102** described herein. That is, a pattern of alternating positive elements **1106** and negative elements **1108** may form the three-dimensional feature described as radially inner three-dimensional portion **1102.**

Radially inner three-dimensional portion **1102** may have a height **RiH.** Blade **1100** may have a height **RH.** Height **RiH** may be about 62% of blade radial height **RH.** Height **RiH** may be 62% of blade radial height **RH.** Height **RiH** may be about 77% of blade radial height **RH** Height **RiH** may be 77% of blade radial height **RH.** Height **RiH** may be about 80% of blade radial height **RH.** Height **RiH** may be 80% of blade radial height **RH.** Height **RiH** may be between about 60% and about 80% of blade radial height **RH.** Height **RiH** may be between 60% and 80% of blade radial height **RH.** Height **RiH** may be between about 55% and about 85% of blade radial height **RH.** Height **RiH** may be between 55% and 85% of blade radial height **RH.** A sipe molded into a tire using blade **1100** will have the same relationship in heights **of RH** and **RiH.**

As illustrated further below, positive elements **1106** and negative elements **1108** may result in corresponding positive elements and negative elements in a three-dimensional tire sipe molded using blade **1100.** These corresponding positive elements and negative elements may interlock with one another so as to create stiffness in a tire tread element having the three-dimensional sipe. The corresponding features may come together along the X-axis, to provide greater shear strength in the Y-Z plane between opposing faces of a sipe, as compared to a traditional, straight wall sipe.

Radially outer zig-zag portion **1101** may be formed by a series of alternating angled surfaces **1110** and **1112,** which form radially-extending peaks **1114** and valleys **1116.** These peaks and valleys may form corresponding peaks and valleys in a tire sipe molded using blade **1100.** These corresponding peaks and valleys may interlock with one another so as to create stiffness in a tire tread element having the three-dimensional sipe.

Radially outer zig-zag portion **1101** may have a height **RoH.** Height **RoH** may be about 20% of blade radial height **RH.** Height **RoH** may be 20% of blade radial height **RH.** Height **RoH** may be about 23% of blade radial height **RH.** Height **RoH** may be 23% of blade radial height **RH.** Height **RoH** may be about 37% of blade radial height **RH.** Height **RoH** may be 37% of blade radial height **RH.** Height **RoH** may be between about 20% and about 40% of blade radial height **RH.** Height **RoH** may be between 20% and 40% of blade radial height **RH.** Height **RoH** may be between about 15% and about 45% of blade radial height **RH** Height **RoH** may be between 15% and 45% of blade radial height **RH.** A sipe molded into a tire using blade **1100** will have the same relationship in heights **of RH** and **RoH.**

The interlocking aspect of the features described herein (in reference to each of the three-dimensional sipes herein) may result in a tire tread sipe that has the increased surface area desired when the sipe is "open" (e.g., while running down a roadway), but may result in increased stiffness when the sipe is "closed" (e.g., under breaking or when heavy tractive forces are applied, which may result in the tread element containing the sipe to be deformed).

Each of the three-dimensional features forming the plurality of positive elements **1106** and a plurality of negative elements **1108** may be made up of three planar surfaces **1118, 1120,** and **1122.** For the ease of description, planar surfaces **1118** and **1120** may be referred to as side surface **1118** and side surface **1120,** while planar surface **1122** may be referred to as top surface **1122.** It is understood that these terms are not intended to be limiting, but rather, are used to simply clarify the relationship between these surfaces.

Each of planar surfaces **1118, 1120,** and **1122** may be angled relative to one another by about 90 degrees. Each of planar surfaces **1118, 1120,** and **1122** may be angled relative to one another by 90 degrees. Each of planar surfaces **1118, 1120,** and **1122** may be angled relative to one another by between about 85 degrees and about 95 degrees. Each of planar surfaces **1118, 1120,** and **1122** may be angled relative to one another by between 85 degrees and 95 degrees. Each of planar surfaces **1118, 1120,** and **1122** may be angled relative to one another by between about 80 degrees and about 100 degrees. Each of planar surfaces **1118, 1120,** and **1122** may be angled relative to one another by between 80 degrees and 100 degrees. Each of planar surfaces **1118, 1120,** and **1122** may be angled relative to one another by between about 75 degrees and about 105 degrees. Each of planar surfaces **1118, 1120,** and **1122** may be angled relative to one another by between 75 degrees and 105 degrees.

In one embodiment, the point at which each of planar surfaces **1118, 1120,** and **1122** meet may be a rounded, terminal portion. The terminal portion may have a radius.

Each of planar surfaces **1118, 1120,** and **1122** may have a quadrilateral shape. One or more of planar surfaces **1118, 1120,** and **1122** may be at least one of a square, a rectangle, a rhombus, and a parallelogram. In one embodiment, each of planar surfaces **1118, 1120,** and **1122** is a square. In another embodiment, top surface **1122** may be square, while side surfaces **1118, 1120** are rectangular.

In one embodiment, top surface **1122** may have a width **EW1.** Top surface **1122** may be square, and thus may have a width **EW1** about each of its four sides. Where side surfaces **1118, 1120** are rectangular, side surfaces **1118, 1120** may also have a width **EW1** about two sides, with a height being greater than or less than **EW1,** which will be further described below.

Blade **1100** may have a longitudinal width **LW.**

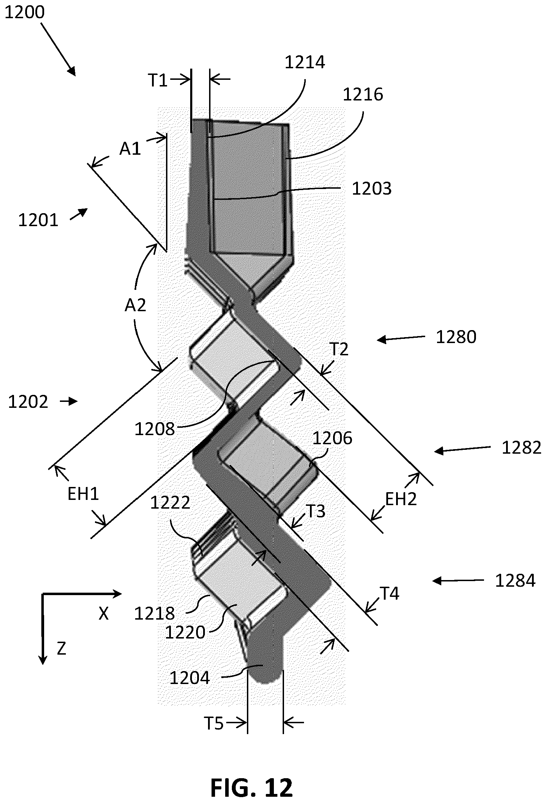

Blade **1100** may include a plurality of rows of positive elements **1106** and negative elements **1108.** It is understood that any positive feature on a first side of blade **1100** forms a negative feature on the opposite side of blade **1100.** For instance, blade **1100** may have three rows of positive elements **1106,** including a first row **1180,** a second row **1182,** and a third row **1184,** in order from a radially outer position to a radially inner position. At least two of rows **1180, 1182,** and **1184** may have different material thicknesses relative to one another (illustrated in **FIG. 12** as **T2, T3,** and **T4).** In one embodiment, each of rows **1180, 1182,** and **1184** may have different thicknesses. For example, first row **1180** may have a thickness of about 0.5 mm, second row **1182** may have at thickness of about 0.5 mm, and third row **1184** may have a thickness of about 1.0 mm. In another example, first row **1180** may have a thickness of about 0.3 mm, second row **1182** may have at thickness of about 0.5 mm, and third row **1184** may have a thickness of about 1.0 mm. The thicknesses of each row may describe the average thickness of that row, as adjacent rows having different thicknesses may include a transition area from the thickness of one row to the thickness of the next. That is, a 0.5 mm row adjacent to a 1.0 mm row may include transition portions between those thicknesses, rather than an abrupt "step" between the two rows. The thickness of first row **1180** is the same as thickness **T2** in **FIG. 12****.** The thickness of second row **1182** is the same as thickness **T3** in **FIG. 12****.** The thickness of third row **1184** is the same as thickness **T4** in **FIG. 12****.**

In one embodiment, the radially outer rows have a lesser material thickness than radially inner rows. Rows may be defined as a series of features that are aligned in the longitudinal direction of the sipe (along the Y-axis in **FIG. 11****).**

First row **1180** may have a thickness of between about 50% and 100% of second row **1182.** First row **1180** may have a thickness of about 60% of second row **1182.** First row **1180** may have a thickness of about 100% of second row **1182.** First row **1180** may have a thickness of between about 30% and 50% of third row **1184.** First row **1180** may have a thickness of about 30% of third row **1184.** First row **1180** may have a thickness of about 50% of third row **1184.**

Second row **1182** may have a thickness between about 40% and 100% of third row **1184.** Second row **1182** may have a thickness between about 50% and 100% of third row **1184.** Second row **1182** may have a thickness of about 50% of third row **1184.**

Where blade **1100** includes additional rows, any row of blade **1100** may have a thickness between about 40% and 100%, or a thickness of about 50%, 60%, or 100% of adjacent rows.

Base **1104** may have a material thickness of about 1.0 mm. Base **1104** may have a thickness equal to third row **1184.** Base **1104** may have a thickness greater than third row **1184.**

One advantage of rows of varying thicknesses, with a general increase in thickness from a radially outer portion to a radially inner portion, may be a strengthening of blade **1100** to prevent breaking of blade **1100** during molding. Unexpectedly, base **1104** being as thick, or thicker, than any other portion of blade **1100** may cause base **1104** to act as a beam, providing greater structural integrity to blade **1100** when compared to prior art blade designs.

Another advantage of rows of varying thicknesses may be a widening of a sipe formed by blade **1100** as that sipe wears in a tire. That is, a sipe formed by blade **1100** will have a sipe width approximately equal to (with perhaps some degree of difference due to the molding process) the thickness of sipe blade **1100.** Thus, a sipe formed by sipe blade **1100,** which thickens as it extends radially inwardly, will likewise have a sipe width increasing as the sipe extends radially inwardly. Such an increase in width may result in mitigation or reduction of the degradation of various properties of the tire as it wears, including for example, traction, drainage, wear rate, handling, stopping, stiffness, and the like.

**FIG. 12** illustrates a sectional view of an example sipe blade **1200** for forming a three-dimensional tire sipe.

Sipe blade **1200** may include a radially outer zig-zag portion **1201,** and a radially inner three-dimensional portion **1202.** Blade **1200** may include a central plane **1203,** and a base **1204.**

Blade **1200** may include a plurality of positive elements **1206** and negative elements **1208.** The plurality of positive elements **1206** and negative elements **1208** may be made up planar surfaces **1218, 1220,** and **1222.** Blade **1200** may include a plurality of valleys **1216** and peaks **1214** oriented in the radially outer zig-zag portion **1201.**

In one embodiment, central plane **1203** bisects the plurality of positive elements **1206** and negative elements **1208.**

Each of the plurality of positive elements **1206** and negative elements **1208** may have a height **EH1, EH2.** Height **EH1, EH2** may be equal to width **EW1** described above with respect to **FIG. 11****.** Height **EH1, EH2** may be less than width **EW1** described above with respect to **FIG. 11****.** Height **EH1, EH2** may be greater than width **EW1** described above with respect to **FIG. 11****.** Height **EH1, EH2** may about 71.5% of width **EW1.** Height **EH1, EH2** may 71.5% of width **EW1.** Height **EH1, EH2** may between about 70% and about 75% of width **EW1.** Height **EH1, EH2** may between 70% and 75% of width **EW1.** Height **EH1, EH2** may between about 65% and about 80% of width **EW1.** Height **EH1, EH2** may between 65% and 80% of width **EW1.** Height **EH1, EH2** may between about 60% and about 85% of width **EW1.** Height **EH1, EH2** may between 60% and 85% of width **EW1.** A sipe molded into a tire using blade **1200** will have the same relationship in heights **EH1, EH2,** and width **EW1.**

The line formed by the intersection of planar surfaces **1218** and **1220** may be oriented at an angle **A1** relative to peak **1214** (and central plane **1203).** Angle **A1** may be about 45 degrees. Angle **A1** may be 45 degrees.

The line formed by the intersection of planar surfaces **1218** and **1220** may be oriented at an angle **A2** relative to planar surface **1222** (forming the top surface). Angle **A2** may be about 90 degrees. Angle **A2** may be 90 degrees.

Blade **1200** may have a plurality of rows of positive elements **1206** and negative elements **1208.** For example, blade **1200** may include a first row **1280,** a second row **1282,** and a third row **1284.** At least two of the rows may have different average material thicknesses relative to one another. First row **1280** may have a thickness **T2,** second row **1282** may have a thickness **T3,** and third row **1284** may have a thickness **T4.** The values of thicknesses **T2, T3,** and **T4** are the same as those described above with respect to **FIG. 11****.**

Blade **1200** may include alternating angled elements making up radially outer zig-zag portion **1201.** The thickness **T1** of the alternating angled elements may be the same as the thickness **T2** of first row **1280.** Alternatively, thickness **T1** may have less than thickness **T2.**

Base **1204** may have a thickness **T5** that is the same as thickness **T4** of third row **1284.** Alternatively, thickness **T5** may be greater than thickness **T4.**

**FIGS. 13A** and **13B** illustrate an example sipe blade **1300** arranged in a mold **1390** for forming a three-dimensional tire sipe. Blade **1300** may include a radially outer zig-zag portion **1301,** and a radially inner three-dimensional portion **1302.** Blade **1300** may include a base **1304.**

Blade **1300** may include a plurality of rows of positive and negative elements forming radially inner three-dimensional portion **1302,** including a first row **1380,** a second row **1382,** and a third row **1384.**

Blade **1300** may be inserted into a mold **1390.** Note that mold **1390** represents a portion of a mold simply to illustrate how blade **1300** would be inserted therein, and that base **1304** is not supported by mold **1390** along its length. Mold **1390** may contact and support three of the four sides of blade **1300,** while base **1304** is unsupported along its length. Thus, base **1304** having a greater material thickness and acting as a beam may provide structural integrity and greater strength to this unsupported edge of blade **1300.**

As illustrated in **FIG. 13B****,** a radius **R** may be formed where base **1304** meets mold **1390** to reduce an stress concentration found at that point. Radius **R** forms a fillet.

It is understood that a tire made using blades **100, 200, 300, 400, 1100, 1200,** and **1300** would have sipes including the characteristics and features of the three-dimensional and two-dimensional elements of blades **100, 200, 300, 400, 1100, 1200,** and **1300,** but in a negative.

Additionally, tires utilizing any of the three-dimensional sipes disclosed herein may yield better performance than a tire utilizing traditional two-dimensional (straight wall) sipes in the following common tire tests: cornering coefficient, snow braking, snow acceleration, snow lateral traction, tire wear, wet roadway lap time, and dry peak friction coefficient.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See Bryan A. Garner, A Dictionary of Modern Legal Usage 624 (2d. Ed. 1995). Also, to the extent that the terms "in" or "into" are used in the specification or the claims, it is intended to additionally mean "on" or "onto." To the extent that the term "substantially" is used in the specification or the claims, it is intended to take into consideration the degree of precision available or prudent in manufacturing. To the extent that the term "selectively" is used in the specification or the claims, it is intended to refer to a condition of a component wherein a user of the apparatus may activate or deactivate the feature or function of the component as is necessary or desired in use of the apparatus. To the extent that the term "operatively connected" is used in the specification or the claims, it is intended to mean that the identified components are connected in a way to perform a designated function. As used in the specification and the claims, the singular forms "a," "an," and "the" include the plural. Finally, where the term "about" is used in conjunction with a number, it is intended to include ± 10% of the number. In other words, "about 10" may mean from 9 to 11. Cartesian coordinates referenced herein are intended to comply with the SAE tire coordinate system.

As stated above, while the present application has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art, having the benefit of the present application. Therefore, the application, in its broader aspects, is not limited to the specific details, illustrative examples shown, or any apparatus referred to. Departures may be made from such details, examples, and apparatuses without departing from the spirit or scope of the general inventive concept.

## Claims

1. A tire having a sipe , comprising:
opposing tread element portions separated by the sipe, each opposing tread element portion including a plurality of positive elements (646; 746; 946) and a plurality of negative elements (648; 748; 948),
wherein the plurality of positive elements (646; 746; 946) and the plurality of negative elements (648; 748; 948) include six planar side surfaces (652; 752; 852; 952) having a trapezoidal shape, each planar side surface (652; 752; 852; 952) being oriented relative to an adjacent planar side surface by an angle of 120 degrees, and
wherein the six planar side surfaces (652; 752; 852; 952) are each connected to a planar terminal surface (650; 750; 850; 950) having a hexagonal shape, wherein the planar terminal surface (650; 750; 850; 950) is parallel to a sipe centerline.

2. The tire of claim 1, wherein each of the positive elements (646; 746; 946) and the negative elements (648; 748; 948) are separated by a planar, diamond-shaped intermediate portion (649; 749; 949) that is coplanar with the sipe centerline.

3. The tire of claim 1 or claim 2, wherein each planar side surface (652; 752; 852; 952) is oriented at an angle relative to the planar terminal surface (650; 750; 850; 950), wherein the angle is between 30 degrees and 50 degrees.

4. The tire of any one of claims 1-3, wherein each of the positive elements (646; 746; 946) and the negative elements (648; 748; 948) have a height measured form the sipe centerline, wherein the planar terminal surface (650; 750; 850; 950) has a width, and wherein the element height is equal to the terminal surface width.

5. A sipe blade (640; 740; 940) for forming a sipe in a tire, comprising:
a central plane (643; 743; 943), and a plurality of positive elements (646; 746; 946) and a plurality of negative elements (648; 748; 948),
wherein the plurality of positive elements (646; 746; 946) and the plurality of negative elements (648; 748; 948) include six planar side surfaces (652; 752; 852; 952) having a trapezoidal shape, each planar side surface (652; 752; 852; 952) being oriented relative to an adjacent planar side surface by an angle of 120 degrees, and
wherein the six planar side surfaces (652; 752; 852; 952) are each connected to a planar terminal surface (650; 750; 850; 950) having a hexagonal shape, wherein the planar terminal surface (650; 750; 850; 950) is parallel to the central plane (643; 743; 943).

6. The sipe blade (640; 740; 940) of claim 5, wherein each of the positive elements (646; 746; 946) and the negative elements (648; 748; 948) are separated by a planar, diamond-shaped intermediate portion (649; 749; 949) that is coplanar with the central plane (643; 743; 943).

7. The sipe blade (640; 740; 940) of claim 5 or claim 6, wherein each planar side surface (652; 752; 852; 952) is oriented at an angle relative to the planar terminal surface (650; 750; 850; 950), wherein the angle is between 30 degrees and 50 degrees.

8. The sipe blade (640; 740; 940) of any one of claims 5-7, wherein each of the positive elements (646; 746; 946) and the negative elements (648; 748; 948) have a height measured form the central plane (643; 743; 943), wherein the planar terminal surface (650; 750; 850; 950) has a width, and wherein the element height is equal to the terminal surface width.
